# EUROPÄISCHE PATENTSCHRIFT

(11) **EP 3 169 577 B1**
(45) Veröffentlichungstag und Bekanntmachung des Hinweises auf die Patenterteilung: **10.10.2018**
(21) Anmeldenummer: 15736297.1
(22) Anmeldetag: 15.07.2015
(51) Int. Cl.: B62D 35/02, B62D 37/02, B62D 35/00

(54) **FAHRZEUG MIT EINER LUFTLEITVORRICHTUNG**
VEHICLE HAVING AN AIR-GUIDING ARRANGEMENT
VÉHICULE MUNI D'UN DISPOSITIF DÉFLECTEUR D'AIR

(30) Priorität: 15.07.2014 DE 102014213678
(43) Veröffentlichungstag der Anmeldung: 24.05.2017
(73) Patentinhaber: Bayerische Motoren Werke Aktiengesellschaft, 80809 München (DE)
(72) Erfinder: TESCH, Gregor, 71364 Winnenden (DE); FAUSER, Markus, 81379 München (DE)
(86) Internationale Anmeldenummer: PCT/EP2015/066188
(87) Internationale Veröffentlichungsnummer: WO 2016/008935

(56) Entgegenhaltungen:
- WO-A1-02/49906
- DE-A1- 3 525 627
- DE-A1-102010 036 442
- DE-A1-102010 037 616

## Beschreibung

Die Erfindung betrifft ein Fahrzeug mit einer vor einem Fahrzeugrad an einer Unterseite des Fahrzeuges angeordneten Luftleiteinrichtung gemäß der im Oberbegriff des Patentanspruches 1 näher definierten Art.

Aus der EP 1 674 381 B1 ist eine Luftleitvorrichtung für ein Fahrzeug bekannt, die im Bereich vor einem Fahrzeugrad angeordnet ist und nach unten in Richtung der Fahrbahn absteht. Die Luftleitvorrichtung weist einen Luftleitkörper auf, der auf seiner radabgewandten Vorderseite konvex gewölbt ist und der an zumindest einem Teilbereich seines freien Endabschnittes eine Abrisskante aufweist, um einen auf das Rad wirkenden Strömungsdruck zu reduzieren und einen Gesamtluftwiderstand des Fahrzeuges zu verringern. Die der Luftleitvorrichtung zugrunde liegende Wirkungsweise stellt eine sogenannte Strömungsabschottung sowohl des drehenden Rades als auch der jeweils zugeordneten Achsgeometrie dar. Stromab der Luftleitvorrichtung wird ein Totwassergebiet in der Strömung erzeugt, welches potentiell angeströmte Bauteile, wie ein Fahrzeugrad und eine Achsgeometrie, abschottet, um den Gesamtluftwiderstand des Fahrzeuges zu reduzieren.

Durch die dabei auftretende turbulente Strömung und den damit einhergehenden Strömungsabriss entsteht jedoch ein anderer Luftwiderstand im Bereich des Fahrzeuges, der in Relation zur Größe des Totwassergebietes steht. Insbesondere die dabei auftretende typische Schräganströmung der Räder leistet einen Beitrag zum Gesamtluftwiderstand. Des Weiteren wird durch die verwirbelte Anströmung des stromab der Luftleitvorrichtung vorhandenen Fahrzeugunterbodens eine aerodynamisch ungünstige Situation erzeugt.

Ferner sind aus der DE 10 2010 037 616 A1, der WO 02/49906 A1 und der DE 10 2010 036 442 A1 gattungsgemäße Fahrzeuge mit Luftleiteinrichtungen bekannt.

Aufgabe der Erfindung ist es, ein Fahrzeug mit einem geringen Gesamtluftwiderstand zur Verfügung zu stellen.

Diese Aufgabe wird durch ein Fahrzeug mit den Merkmalen des Anspruches 1 gelöst.

Erfindungsgemäß wird das Fahrzeug mit einer dreidimensional geformten Luftleiteinrichtung ausgebildet, die mit einer aerodynamisch wirksamen Fläche bzw. einer Leitfläche ausgeführt ist, die im Wesentlichen in Fahrzeughochrichtung verläuft und durch einen einer Fahrzeugmitte zugewandten Seitenbereich gebildet ist.

Die Luftleiteinrichtung ist vor einem Fahrzeugrad an einer Unterseite des Fahrzeuges angeordnet und umfasst einen Luftleitkörper, der die im Wesentlichen in Fahrzeughochrichtung verlaufende und einer Fahrzeugmitte zugewandte Leitfläche und einen einem Untergrund zugewandten und mit der Leitfläche verbundenen sowie von der Unterseite beabstandeten Bodenbereich aufweist.

Um einen Luftstrom bzw. eine Strömung ist an der Außenseite des Luftleitkörpers in gewünschtem Umfang ausrichten zu können, ein Außenbereich des Luftleitkörpers, der der Fahrzeugmitte abgewandt sowie mit dem Bodenbereich verbunden ist, in Bezug auf eine Außenseite des Fahrzeuges mit einer konvexen Krümmung ausgeführt. Der Luftstrom ist über den Außenbereich des Luftleitkörpers in Richtung einer Außenflanke des Fahrzeugrades lenkbar, um die Queranströmung des Fahrzeugrades zu minimieren bzw. zu vermeiden.

Des Weiteren ist ein Luftstrom über die Leitfläche in Fahrzeuglängsrichtung ausrichtbar, womit Turbulenzen beim Strömungsabriss im Bereich stumpfer Radstaukörper sowie eine Schräganströmung der Fahrzeugräder bzw. der Vorderräder eines Fahrzeuges, insbesondere im Bereich des Felgenbettes, verringert werden.

Mit der Erfindung wird erreicht, dass der Luftstrom, der im Bereich der Fahrzeugräder, insbesondere im Bereich der Vorderräder, grundsätzlich mit einer schräg zur Fahrzeugaußenseite weisenden Strömungsrichtung einströmt, durch die Leitfläche in Fahrzeuglängsrichtung ausgerichtet wird. Damit wird die oben erwähnte Schräganströmung insbesondere der Vorderräder reduziert, wobei der Luftstrom aufgrund der Druckverhältnisse im Bereich des Fahrzeugrads dennoch in geringem Maß in Richtung des Radinneren abgelenkt und zumindest teilweise in das Radinnere geführt wird, wodurch die Kühlung der Radbremse unterstützt wird.

Erfindungsgemäß ist die Luftleiteinrichtung mit einem weiteren Luftleitkörper bzw. mit einem Keil oder einer ähnlichen Geometrie ausgeführt, der zwischen dem Luftleitkörper und der Fahrzeugmitte angeordnet ist. Die Strömung wird dann an der Unterseite des Fahrzeuges leicht und verlustarm abgelenkt und die Strömung wird primär über das Fahrwerk und die hintere Kante des Radhauses geführt.

Vorliegend werden unter dem Begriff Radstaukörper aerodynamische Bauteile subsumiert, die vor einem Fahrzeugrad angeordnet sind und auch zur Abschirmung einer Radhausunterseite vorgesehen sowie im erfindungsgemäßen Umfang ausgebildet sind.

In Ausgestaltung der Erfindung ist der Luftstrom über die Leitfläche zusätzlich in Richtung der Fahrzeugmitte ausrichtbar. Hierbei wird durch entsprechende Gestaltung der Leitfläche ein Teil des Luftstroms in Richtung der Fahrzeugmitte ausgerichtet und damit von der Radinnenseite weggelenkt, so dass das Einströmen von Strömungsluft in das Felgenbett reduziert wird. Damit verbunden ist eine Senkung des Luftwiderstandsbeiwerts. Gleichzeitig wird durch die reduzierte Einströmung des Luftstroms in das Felgenbett jedoch die Kühlung der Radbremse reduziert, so dass diese Maßnahme auf das Gesamtkonzept des Fahrzeugs abzustimmen ist. Beispielsweise kann die Maßnahme bei Fahrzeugen zur Anwendung kommen, bei denen der Fokus auf einer Verringerung des Kraftstoffverbrauchs liegt.

Über die Leitfläche bzw. den Seitenbereich und eine im Stoßbereich zwischen der Leitfläche und dem Bodenbereich vorgesehene Kante, die im Wesentlichen in Fahrzeuglängsrichtung verlaufend ausgeführt ist, wird die Strömung in einem einer Fahrzeugvorderseite zugewandten Bereich des Luftleitkörpers in Strömungsrichtung eingefangen und über den Seitenbereich bzw. die Leitfläche am Luftleitkörper bzw. am Radstaukörper entlang in Fahrzeuglängsrichtung und sogar in Richtung Fahrzeugmitte ausgerichtet.

Ist die Leitfläche wenigstens annähernd rechtwinklig zur Unterseite des Fahrzeuges verlaufend angeordnet, ist die Neigung der Strömung minimiert, den Luftleitkörper ausgehend von der Fahrzeugmitte in Richtung der Außenseite des Fahrzeuges im Wesentlichen in Fahrzeugquerrichtung zu überströmen, womit die Strömungsführung entlang des inneren Bereiches des Luftleitkörpers in gewünschtem Umfang in Fahrzeuglängsrichtung oder auch in Richtung Fahrzeugmitte ausrichtbar ist.

Überragt der Luftleitkörper den Unterboden des Fahrzeuges in Strömungsrichtung zunehmend in Richtung des Untergrundes des Fahrzeuges, wird die Strömung im Bereich des Luftleitkörpers mit geringen Verlusten von dem dem Luftleitkörper in Strömungsrichtung folgenden Radhaus in Bezug auf die Fahrzeughochrichtung nach unten weggeführt.

Sind die Leitfläche des Luftleitkörpers und die Kante des Stoßbereichs in Bezug auf die Fahrzeugmitte mit einer konkaven Krümmung ausgeführt, legt sich die Strömung im vorderen Bereich des Luftleitkörpers zunächst ohne einen Strömungswiderstand erhöhende Umlenkungen an. Anschließend wird die Strömung vom Seitenbereich dem Krümmungsradius des Seitenbereiches entsprechend von dem dem Luftleitkörper folgenden Fahrzeugrad, der zugeordneten Achsgeometrie sowie dem Radhaus in Fahrzeuglängsrichtung weggeführt und bei entsprechender Länge des Luftleitkörpers unter Umständen zusätzlich in Richtung der Fahrzeugmitte abgelenkt.

Hierfür ist es besonders vorteilhaft, wenn ein Abstand zwischen der Leitfläche bzw. dem Seitenbereich und der Fahrzeugmitte ausgehend vom vorderen Bereich des Seitenbereiches in Richtung des hinteren Bereiches der Leitfläche ansteigt und unter Umständen sogar in Richtung der Fahrzeugmitte wieder abnimmt. Dies resultiert aus der Tatsache, dass ein Fahrzeug an seiner Unterseite ausgehend von seinem vorderen mittigen Staupunkt mit einem fahrzeugspezifischen Strömungswinkel gegenüber einer Fahrzeuglängsachse in Richtung der Fahrzeugaußenseiten angeströmt wird und die schräge Strömung im Bereich der Unterseite des Fahrzeuges dann mit geringen Verlusten in gewünschtem Umfang vom Fahrzeugrad, der jeweils zugeordneten Achsgeometrie und dem Radhaus vom Luftleitkörper weggeführt bzw. an diesen verlustarm vorbeigeführt wird.

Der weitere Luftleitkörper überragt den Unterboden des Fahrzeuges in Strömungsrichtung vorzugsweise zunehmend, um die Strömung in gewünschtem Umfang ablenken zu können.

Um die Schräganströmung des Fahrzeugrades zu vermindern, ist im Bereich des weiteren Luftleitkörpers wenigstens ein Luftleitsteg bzw. eine vorzugsweise senkrecht stehende Leitfinne vorgesehen, mittels der die Strömung an der Unterseite des Fahrzeuges in einem die Schräganströmung vermindernden Umfang ablenkbar ist.

Weist der Luftleitsteg eine der Leitfläche wenigstens annähernd entsprechende konkave Krümmung auf, wird die Ablenkung der Strömung wiederum mit geringen Verlusten erreicht.

Steigt die Höhe des Luftleitsteges zumindest abschnittsweise an, wird die Wirkung des Luftleitsteges weiter erhöht, da einem in Strömungsrichtung ansteigenden Bestreben, den Luftleitsteg in Fahrzeugquerrichtung zu überströmen, mit geringem Aufwand entgegengetreten wird.

Vorteilhafte Ausgestaltungen der Erfindung sind Gegenstand der Unteransprüche.

Ein Ausführungsbeispiel der Erfindung ist in der Zeichnung dargestellt und wird nachfolgend näher erläutert.

Es zeigt:
- Fig. 1: eine schematisierte Teilunteransicht eines Fahrzeuges im Bereich eines Fahrzeugvorderrades;
- Fig. 2: den in Fig. 1 gezeigten Bereich des Fahrzeuges aus einer in Fig. 1 näher gekennzeichneten Ansicht II; und
- Fig. 3: eine vereinfachte dreidimensionale Teildarstellung des Fahrzeuges aus einer in Fig. 1 gezeigten Ansicht III.

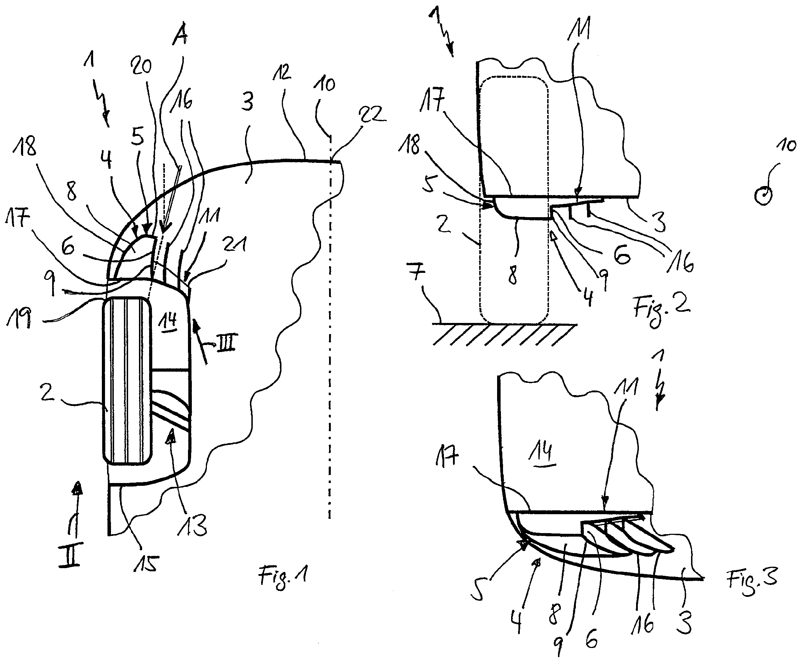

Fig. 1 zeigt einen vorderen Bereich eines Fahrzeuges 1 bzw. eines Kraftfahrzeuges mit einem Fahrzeugrad 2. An einer Unterseite 3 des Fahrzeuges 1 ist eine Luftleiteinrichtung 4 mit einem ersten Luftleitkörper 5 vorgesehen. Der dreidimensional und hohl ausgeführte Luftleitkörper 5 weist eine ebenfalls in Fig. 2 und Fig. 3 gezeigte Leitfläche 6 auf, die bei dem in der Zeichnung dargestellten Ausführungsbeispiel wenigstens annähernd rechtwinklig zur Unterseite 3 des Fahrzeuges verlaufend angeordnet und nachfolgend als Seitenbereich 6 bezeichnet ist. Der Seitenbereich 6 ist mit einem einem Untergrund 7 zugewandten Bodenbereich 8 verbunden, der von der Unterseite 3 des Fahrzeuges beabstandet ist. Im Stoßbereich zwischen dem Seitenbereich 6 und dem Bodenbereich 8 ist eine im Wesentlichen in Fahrzeuglängsrichtung verlaufende Kante 9 vorgesehen, die eine Trennung eines in Bezug auf eine Fahrzeugmitte 10 neben dem Seitenbereich 6 vom ersten Luftleitkörper 5 gebildeten Strömungsbereiches und einem vom Bodenbereich 8 und dem Untergrund 7 begrenzten Strömungsbereich 8 herstellt. Der scharfkantige Übergang zwischen dem Seitenbereich 6 und dem Bodenbereich 8 bewirkt, dass die entlang des Seitenbereiches 6 geführte Strömung wenn überhaupt nur in geringem Umfang über die Kante 9 in den zwischen dem Untergrund 7 und dem Bodenbereich 8 begrenzten Strömungsbereich übertritt und eine unerwünschte Queranströmung des Rades 2 im Wesentlichen ausbleibt.

Zwischen dem ersten Luftleitkörper 5 und der Fahrzeugmitte 10 ist vorliegend ein zweiter Luftleitkörper 11 vorgesehen, der sich vom Seitenbereich 6 im Wesentlichen in Fahrzeugquerrichtung erstreckt. Sowohl der erste Luftleitkörper 5 als auch der zweite Luftleitkörper 11 überragen den Unterboden 3 in Richtung des Untergrundes ausgehend von einer Fahrzeugvorderseite 12 in Richtung des Fahrzeugrades 2 zunehmend, wobei die Luftleiteinrichtung 4 vorliegend bündig mit einer vorderen Kante 17 eines Radhauses 14 abschließt. Stromauf der Luftleiteinrichtung 4 wird die am Unterboden 3 entlangströmende Luft im Bereich des ersten Luftleitkörpers 5 und im Bereich des zweiten Luftleitkörpers 11 aus der Strömungsebene des Unterbodens 3 in Richtung des Untergrundes 7 geführt, um das Fahrzeugrad 2, eine Achsgeometrie 13 und das Radhaus 14 möglichst von der Strömung an der Unterseite 3 des Fahrzeuges 1 abschotten zu können. Ein der Fahrzeugvorderseite 12 zugewandter vorderer Bereich 21 des zweiten Luftleitkörpers 11 ist in Bezug auf den vorderen Bereich 20 des ersten Luftleitkörpers 5 in Strömungsrichtung versetzt angeordnet und eine Höhe des zweiten Luftleitkörpers 11 ist kleiner als eine Höhe des ersten Luftleitkörpers 5, da die Strömung im Bereich des zweiten Luftleitkörpers 11 in geringerem Umfang von der Unterseite 3 wegzuführen ist, um den Gesamtluftwiderstand des Fahrzeuges 1 in gewünschtem Umfang zu minimieren.

Sowohl der erste Luftleitkörper 5 als auch der zweite Luftleitkörper 11 weisen in Strömungsrichtung eine wenigstens annähernd keilförmige Geometrie auf, die eine leichte und verlustarme Ablenkung der Strömung primär über das Fahrwerk bzw. die Achsgeometrie und eine hintere Kante 15 des Radhauses 14 bewirkt. Die konkave Krümmung des Seitenbereiches 6 und der Kante 9 sowie eine in Bezug auf die Fahrzeugaußenseite konvexe Krümmung eines Außenbereiches 18 des Luftleitkörpers gewährleisten eine leichte und verlustarme Ablenkung der Strömung in Fahrzeuglängsrichtung und in Fahrzeugquerrichtung, um eine Queranströmung des Fahrzeugrades 2 und ein Einströmen in eine Felge des Fahrzeugrades 3 zu minimieren.

Zusätzlich sind im Bereich des zweiten Luftleitkörpers 11 senkrecht stehende Leitstege bzw. Leitfinnen 16 vorgesehen, die ebenfalls eine Schräganströmung des Fahrzeugrades 2 vermindern. Eine Höhe der Leitfinnen 16 steigt wie die Höhe des ersten Luftleitkörpers 5 und des zweiten Luftleitkörpers 11 in Strömungsrichtung, d. h. ausgehend von der Fahrzeugvorderseite 12 in Richtung des Fahrzeugrades 2 an, wobei sich die Leitstege 16 in Fahrzeuglängsrichtung in etwa über die gleiche Länge wie der Luftleitkörper 5 an der Unterseite 3 des Fahrzeuges erstrecken.

Ein in Fig. 1 gezeigter Pfeil A gibt die Strömungsrichtung der Luft im Bereich der Luftleiteinrichtung 4 wieder, die sich in Abhängigkeit der aerodynamischen Gestaltung der Fahrzeugkarosserie und der Unterseite 3 des Fahrzeuges 1 ausgehend von einem im Bereich der Fahrzeugmitte 10 und der Fahrzeugvorderseite 12 angeordneten Staupunkt 22 des Fahrzeuges 1 einstellt. Dabei variiert die Strömungsrichtung A der Strömung im Bereich der Unterseite 3 des Fahrzeuges 1 sowohl in Abhängigkeit des Abstandes zur Fahrzeugmitte 10 als auch in Abhängigkeit der aerodynamischen Gestaltung des Fahrzeuges 1. In Abhängigkeit der Strömungsrichtung A wird auch die konkave Krümmung des Seitenbereiches 6 und die konvexe Krümmung des Außenbereiches 18 des ersten Luftleitkörpers 5 ausgelegt. Zusätzlich wird auch eine Krümmung der Leitfinnen 16 an die Strömungsrichtung A angepasst, um die Queranströmung des Fahrzeugrades 8 in Abhängigkeit der jeweils vorliegenden aerodynamischen Gestaltung des Fahrzeuges 1 bei gleichzeitig geringen Umlenkverlusten minimieren zu können.

Grundsätzlich stellt die Luftleiteinrichtung 4 einen Radstaukörper dar, der in zwei Bereiche aufgeteilt ist, die von einer aerodynamisch wirksamen Fläche, d. h. der Leitfläche bzw. dem Seitenbereich 6, strömungstechnisch voneinander getrennt sind. Das Fahrzeugrad 2 wird vom ersten Luftleitkörper 5 von der Anströmung abgeschottet, wobei die Strömung vom ersten Luftleitkörper 5 in dessen Außenbereich 18 so gelenkt wird, dass diese in Fahrzeuglängsrichtung eine äußere Radflanke 19 lediglich tangiert.

Im Bereich der Innenseite des Fahrzeugrades 2 wird die Strömung in einem vorderen Bereich 20 der Luftleiteinrichtung 4 in Strömungsrichtung eingefangen und im Seitenbereich 6 sowie im Bereich der Leitfinnen 16 in Fahrzeuglängsrichtung und zusätzlich in Richtung der Fahrzeugmitte 10 ausgerichtet.

Die zusätzliche Ausrichtung des Luftstroms in Richtung der Fahrzeugmitte 10 wird durch eine entsprechende Gestaltung des Seitenbereichs 6 in seinem Endbereich erreicht. Wie anschaulich aus der Untersicht auf das Fahrzeug in Fig. 1 hervorgeht, ist der Endbereich des Seitenbereichs 6 leicht nach innen in Richtung der Fahrzeugmitte 10 geneigt. Mit anderen Worten weicht eine in einer Horizontalebene an den Endbereich des Seitenbereichs 6 angelegte Tangente unter einem kleinen Winkel von der Fahrzeuglängsrichtung ab.

Durch die Anordnung der Luftleiteinrichtung 4 werden Turbulenzen beim Strömungsabriss im Bereich stumpfer Radstaukörper sowie eine Schräganströmung der Fahrzeugräder 2 bzw. der Vorderräder eines Fahrzeuges, insbesondere im Bereich des Felgenbettes, verringert. Des Weiteren wird mittels der Luftleiteinrichtung 4 ein günstiges Wiederanlegen der Unterbodenströmung stromab des Radhauses 14 erreicht und insgesamt ein Gesamtluftwiderstand des Fahrzeuges 1 im Vergleich zu bekannten Lösungen reduziert.

## Patentansprüche

1. Fahrzeug (1) mit einer vor einem Fahrzeugrad (2) an einer Unterseite (3) des Fahrzeuges (1) angeordneten Luftleiteinrichtung (4), die einen Luftleitkörper (5) umfasst, der eine im Wesentlichen in Fahrzeughochrichtung verlaufende und einer Fahrzeugmitte (10) zugewandte Leitfläche (6) und einen einem Untergrund (7) zugewandten und mit der Leitfläche (6) verbundenen sowie von der Unterseite (3) beabstandeten Bodenbereich (8) aufweist, wobei ein Luftstrom in einem Außenbereich (18) des Luftleitkörpers (5), der der Fahrzeugmitte (10) abgewandt sowie mit dem Bodenbereich (8) verbunden ist und in Bezug auf eine Außenseite des Fahrzeuges (1) mit einer konvexen Krümmung ausgeführt ist, in Richtung einer Außenflanke (19) des Fahrzeugrades (2) lenkbar ist, während ein Luftstrom über die Leitfläche (6) in Fahrzeuglängsrichtung ausrichtbar ist, **dadurch gekennzeichnet, dass** die Luftleiteinrichtung (4) einen weiteren Luftleitkörper (11) aufweist, der in Fahrzeugquerrichtung zwischen dem Luftleitkörper (5) und der Fahrzeugmitte (10) angeordnet ist, in Fahrzeuglängsrichtung mit einer geringeren Tiefe als der Luftleitkörper (5) ausgeführt ist und sich direkt von der Leitfläche (6) oder beabstandet von der Leitfläche (6) im Wesentlichen in Richtung der Fahrzeugmitte (10) erstreckt.

2. Fahrzeug nach Anspruch 1, **dadurch gekennzeichnet, dass** der Luftstrom über die Leitfläche (6) zusätzlich in Richtung der Fahrzeugmitte (10) ausrichtbar ist.

3. Fahrzeug nach Anspruch 1 oder 2, **dadurch gekennzeichnet, dass** im Stoßbereich zwischen der Leitfläche (6) und dem Bodenbereich (8) eine im Wesentlichen in Fahrzeuglängsrichtung verlaufende Kante (9) vorgesehen ist.

4. Fahrzeug nach einem der Ansprüche 1 bis 3, **dadurch gekennzeichnet, dass** die Leitfläche (6) wenigstens annähernd rechtwinklig zur Unterseite (3) des Fahrzeuges (1) verlaufend angeordnet ist.

5. Fahrzeug nach einem der Ansprüche 1 bis 4, **dadurch gekennzeichnet, dass** der Bodenbereich (8) und die Leitfläche (6) des Luftleitkörpers (5) die Unterseite (3) des Fahrzeuges (1) ausgehend von dem einer Fahrzeugvorderseite (12) zugewandten Bereich (20) des Luftleitkörpers (5) in Richtung eines der Fahrzeugvorderseite (12) abgewandten Bereiches (17) zunehmend überragen.

6. Fahrzeug nach einem der Ansprüche 1 bis 5, **dadurch gekennzeichnet, dass** die Leitfläche (6) und die Kante (9) des Stoßbereiches in Bezug auf die Fahrzeugmitte (10) mit einer konkaven Krümmung ausgeführt sind.

7. Fahrzeug nach Anspruch 5 oder 6, **dadurch gekennzeichnet, dass** ein Abstand zwischen einem der Fahrzeugvorderseite (12) zugewandten Bereich der Leitfläche (6) und der Fahrzeugmitte (10) in Fahrzeugquerrichtung kleiner ist als ein Abstand zwischen dem von der Fahrzeugvorderseite (12) abgewandten Bereich (17) der Leitfläche (6) und der Fahrzeugmitte (10) in Fahrzeugquerrichtung.

8. Fahrzeug nach einem der Ansprüche 1 bis 7, **dadurch gekennzeichnet, dass** der weitere Luftleitkörper (11) die Unterseite (3) des Fahrzeuges (1) ausgehend von einem der Fahrzeugvorderseite (12) zugewandten Bereich (21) des weiteren Luftleitkörpers (11) in Richtung des der Fahrzeugvorderseite (12) abgewandten Bereiches (17) zunehmend überragt.

9. Fahrzeug nach einem der Ansprüche 1 bis 8, **dadurch gekennzeichnet, dass** zumindest im Bereich des weiteren Luftleitkörpers (11) wenigstens ein Luftleitsteg (16) vorgesehen ist, der zwischen der Leitfläche (6) des Luftleitkörpers (5) und der Fahrzeugmitte (10) angeordnet ist und im Wesentlichen in Fahrzeuglängsrichtung verläuft.

10. Fahrzeug nach Anspruch 9, **dadurch gekennzeichnet, dass** der Luftleitsteg (16) eine der Leitfläche (6) wenigstens annähernd entsprechende konkave Krümmung aufweist.

11. Fahrzeug nach Anspruch 9 oder 10, **dadurch gekennzeichnet, dass** eine Höhe des Luftleitsteges (16) ausgehend von einem der Fahrzeugvorderseite (12) zugewandten Bereich in Fahrzeuglängsrichtung zumindest abschnittsweise ansteigt.

## Claims

1. A vehicle (1), comprising an air-guiding device (4) which is arranged in front of a vehicle wheel (2) on a lower surface (3) of the vehicle (1) and comprises an air-guiding body (5) which has a guide face (6) extending substantially in the vertical direction of the vehicle and facing a vehicle centre (10), and a floor region (8) which faces a ground (7), is connected to the guide face (6) and is at a distance from the lower surface (3), wherein an airflow in an outer region (18) of the air-guiding body (5), which faces away from the vehicle centre (10), is connected to the floor region (8) and is formed with a convex curvature with respect to an outer face of the vehicle (1), can be deflected in the direction of an outer side (19) of the vehicle wheel (2), whereas an airflow can be oriented in the longitudinal direction of the vehicle by means of the guide face (6), **characterised in that** the air-guiding device (4) comprises an additional air-guiding body (11), which is arranged in the transverse direction of the vehicle between the air-guiding body (5) and the vehicle centre (10), is formed with a smaller depth in the longitudinal direction of the vehicle than the air-guiding body (5), and extends directly from the guide face (6) or at a distance from the guide face (6) substantially in the direction of the vehicle centre (10).

2. A vehicle according to claim 1, **characterised in that** the airflow can additionally be oriented in the direction of the vehicle centre (10) by means of the guide face (6).

3. A vehicle according to either claim 1 or claim 2, **characterised in that**, in the abutment region between the guide face (6) and the floor region (8), an edge (9) extending substantially in the longitudinal direction of the vehicle is provided.

4. A vehicle according to any of claims 1 to 3, **characterised in that** the guide face (6) is arranged such that it extends at least approximately at a right angle to the lower surface (3) of the vehicle (1).

5. A vehicle according to any of claims 1 to 4, **characterised in that** the floor region (8) and the guide face (6) of the air-guiding body (5) increasingly protrude beyond the lower surface (3) of the vehicle (1), starting from the region (20) of the air-guiding body (5) facing a front (12) of the vehicle towards a region (17) facing away from the front (12) of the vehicle.

6. A vehicle according to any of claims 1 to 5, **characterised in that** the guide face (6) and the edge (9) of the abutment region are formed with a concave curvature with respect to the vehicle centre (10).

7. A vehicle according to either claim 5 or claim 6, **characterised in that** a distance between a region of the guide face (6) which faces the front (12) of the vehicle and the vehicle centre (10) in the transverse direction of the vehicle is smaller than a distance between the region (17) of the guide face (6) which faces away from the front (12) of the vehicle and the vehicle centre (10) in the transverse direction of the vehicle.

8. A vehicle according to any of claims 1 to 7, **characterised in that** the additional air-guiding body (11) increasingly protrudes beyond the lower surface (3) of the vehicle (1), starting from a region (21) of the additional air-guiding body (11) which faces the front (12) of the vehicle towards the region (17) which faces away from the front (12) of the vehicle.

9. A vehicle according to any of claims 1 to 8, **characterised in that**, at least in the region of the additional air-guiding body (11), at least one air-guiding web (16) is provided, which is arranged between the guide face (6) of the air-guiding body (5) and the vehicle centre (10) and extends substantially in the longitudinal direction of the vehicle.

10. A vehicle according to claim 9, **characterised in that** the air-guiding web (16) has a concave curvature which corresponds at least approximately to the guide face (6).

11. A vehicle according to either claim 9 or claim 10, **characterised in that** a height of the air-guiding web (16), starting from a region which faces the front (12) of the vehicle, increases at least in some portions in the longitudinal direction of the vehicle.

## Revendications

1. Véhicule (1) comprenant un dispositif déflecteur d'air (4) monté à l'avant d'une roue (2) du véhicule sur le dessous (3) de celui-ci, et qui comporte un corps de déflecteur (5) ayant une surface de guidage (6) s'étendant essentiellement dans la direction de la hauteur du véhicule et tournée vers le centre (10) du véhicule, ainsi qu'une zone de fond (8) tournée vers le sol (7) reliée à la surface de guidage (6), et située à distance du dessous (3) du véhicule, un flux d'air situé dans une zone extérieure (18) du corps de déflecteur (5) opposée au centre (10) du véhicule reliée avec la zone de fond (8) et présentant une courbure convexe par rapport au côté externe du véhicule (1) pouvant être dévié en direction du flanc externe (19) de la roue (2) du véhicule tandis qu'un flux d'air peut être orienté sur la surface de guidage (6) dans la direction longitudinale du véhicule,
**caractérisé en ce que**
le dispositif déflecteur d'air (4) comprend un autre corps de déflecteur (11) qui est monté dans la direction transversale du véhicule entre le corps de déflecteur (5) et le centre (10) du véhicule a dans la direction longitudinale du véhicule une profondeur inférieure à celle du corps de déflecteur (5) et s'étend directement à partir de la surface de guidage (6) ou à distance de cette surface de guidage (6) essentiellement en direction du centre (10) du véhicule.

2. Véhicule conforme à la revendication 1,
**caractérisé en ce que**
le flux d'air peut en outre être orienté par l'intermédiaire de la surface de guidage (6) en direction du centre (10) du véhicule.

3. Véhicule conforme à la revendication 1 ou 2,
**caractérisé en ce qu'**
il est prévu dans la zone de jointure entre la surface de guidage (6) et la zone de fond (8) une arête (9) s'étendant essentiellement dans la direction longitudinale du véhicule.

4. Véhicule conforme à l'une des revendications 1 à 3,
**caractérisé en ce que**
la surface de guidage (6) s'étend au moins essentiellement à angle droit par rapport au dessous (3) du véhicule (1).

5. Véhicule conforme à l'une des revendications 1 à 4,
**caractérisé en ce que**
la zone de fond (8) et la surface de guidage (6) du corps de déflecteur (5) dépassent de plus en plus du dessous (3) du véhicule (1) à partir de la zone (20) du corps de déflecteur (5) tournée vers l'avant (12) du véhicule en direction de la zone (17) opposée à l'avant du véhicule (12).

6. Véhicule conforme à l'une des revendications 1 à 5,
**caractérisé en ce que**
la surface de guidage (6) et l'arête (9) de la zone de jointure sont réalisées avec une courbure concave par rapport au centre (10) du véhicule.

7. Véhicule conforme à la revendication 5 ou 6,
**caractérisé en ce que**
la distance entre la zone de la surface de guidage (6) tournée vers l'avant (12) du véhicule et le centre (10) du véhicule dans la direction transversale de ce véhicule est plus petite que la distance entre la zone (17) de la surface de guidage (6) située à l'opposé de l'avant du véhicule (12) et le centre (10) du véhicule dans la direction transversale du véhicule.

8. Véhicule conforme à l'une des revendications 1 à 7,
**caractérisé en ce que**
l'autre corps de déflecteur (11) dépasse de plus en plus du dessous (3) du véhicule (1) à partir de la zone (21) tournée vers l'avant (12) du véhicule de cet autre corps de déflecteur (11) en direction de la zone (17) opposée à l'avant (12) du véhicule.

9. Véhicule conforme à l'une des revendications 1 à 8,
**caractérisé en ce qu'**
il est prévu au moins dans la zone de l'autre corps de déflecteur (11) au moins une barrette de déflecteur (16) qui est montée entre la surface de guidage (6) du corps de déflecteur (5) et le centre (10) du véhicule et s'étend essentiellement dans la direction longitudinale de ce véhicule.

10. Véhicule conforme à la revendication 9,
**caractérisé en ce que**
la barrette de déflecteur (16) a une courbure concave correspondant au moins essentiellement à la surface de guidage (6).

11. Véhicule conforme à la revendication 9 ou 10,
**caractérisé en ce que**
la hauteur de la barrette de déflecteur (16) augmente au moins par zones dans la direction longitudinale du véhicule à partir de la zone tournée vers l'avant (12) du véhicule.
